# EUROPEAN PATENT SPECIFICATION

(11) **EP 1 830 041 B1**
(45) Date of publication and mention of the grant of the patent: **11.03.2009**
(21) Application number: 05807040.0
(22) Date of filing: 17.11.2005
(51) Int. Cl.: F01N 3/08, B01D 53/94, C01C 1/08, F01N 3/28

(54) **EXHAUST PURIFICATION APPARATUS**
ABGASREINIGUNGSVORRICHTUNG
APPAREIL DE PURIFICATION DES GAZ D ECHAPPEMENT

(30) Priority: 18.11.2004 JP 2004334578
(43) Date of publication of application: 05.09.2007
(73) Proprietor: Hino Motors, Ltd., Hino-shi, Tokyo 191-8660 (JP)
(72) Inventor: SATO, Shinya, Hino-shi, Tokyo 1918660 (JP); FURUKAWA, Takatoshi, Hino-shi, Tokyo 1918660 (JP)
(74) Representative: LOUIS, PÖHLAU, LOHRENTZ
(86) International application number: PCT/JP2005/021108
(87) International publication number: WO 2006/054632

(56) References cited:
- EP-A- 0 577 853
- WO-A-99/56858
- WO-A1-02/094420
- JP-A- 2001 525 902
- JP-A- 2002 508 466
- JP-A- 2004 306 019
- JP-A- 2004 313 917

## Description

### Technical Field

The present invention relates to an exhaust emission control device applied to an engine such as diesel engine.

### Background Art

Conventionally, some diesel engines have been provided with selective reduction catalyst incorporated in an exhaust pipe through which exhaust gas flows, said catalyst having a characteristic of selectively reacting NOₓ with a reducing agent even in the presence of oxygen. A required amount of reducing agent is added upstream of the selective reduction catalyst and is reacted with NOₓ (nitrogen oxides) in exhaust gas on the catalyst to thereby reduce a concentration of the discharged NOₓ.

Meanwhile, it is well known in a field of industrial flue gas denitration in a plant or the like that ammonia (NH₃) has effectiveness as a reducing agent for reduction and purification of NOₓ. However, in a field of automobile, guaranteed safety is hard to obtain with respect to travel with ammonia itself being loaded, so that researches have been made nowadays on use of nontoxic urea water as reducing agent (see, for example, Reference 1).

More specifically, when added to the exhaust gas upstream of the selective reduction catalyst, the urea water is pyrolytically decomposed by heat of the exhaust gas into ammonia and carbon dioxide according to the following equation, and NOₓ in the exhaust gas on the catalyst is satisfactorily reduced and purified by the ammonia generated.

(NH₂)₂CO + H₂O → 2NH₃ + CO₂

[Reference 1] JP 2002-161732A

### Summary of the Invention

### Problems to be Solved by the Invention

It has been experimentally ascertained that, by adding ammonia to selective reduction catalyst in such kind of exhaust emission control device, NOₓ reduction effect will be obtained, provided that exhaust temperature exceeds about 140°C; however, pyrolytical decomposition of urea water into ammonia and carbon dioxide requires exhaust temperature of at least about 170-180°C. Thus, if an operating status with exhaust temperature of lower than about 200°C continues (generally speaking, low-load operational areas are areas with low exhaust temperature), there is a problem that NOₓ reduction ratio is hardly to enhance since decomposition of urea water into ammonia does not proceed well. For example, in a vehicle such as city shuttle-bus with travel pattern of almost always traveling on congested roads, an operation with more than required exhaust temperature does not continue for a long time, and operational transitions occur with no chance of NOₓ reduction ratio being enhanced, failing in obtaining satisfactory NOₓ reduction effect.

The invention was made in view of the above and has its object to provide an exhaust emission control device which can obtain satisfactory NOₓ reduction effect even at exhaust temperature lower than that required conventionally therefor and even in a vehicle with travel pattern of continuing operational status with low exhaust temperature, which can effectively generate ammonia from urea water and which can enhance controllability in adding ammonia to the exhaust gas.

### Means or Measures for Solving the Problems

The invention is directed to an exhaust emission control device with selective reduction catalyst incorporated in an exhaust pipe, ammonia being added upstream of the catalyst so as to reduce and purify NOₓ, said exhaust emission control device comprising an ammonia generator with a vessel for holding urea water and with an electrode for generation of ammonia through action of plasma on the urea water in the vessel, the ammonia generated in the ammonia generator being fed upstream of the catalyst.

According to the above means, the ammonia generated through action of the plasma on the urea water in the ammonia generator is fed upstream of the selective reduction catalyst, so that a required amount of ammonia can be surely added to the exhaust gas even in an operational status with low exhaust temperature to thereby be effectively reacted with NOₓ in the exhaust gas on the selective reduction catalyst; as a result, NOₓ in the exhaust gas is satisfactorily reduced and purified even at exhaust temperature lower than that required conventionally therefor. Generation of ammonia can be easily and rapidly adjusted since the ammonia is generated through action of plasma on the urea water; and response in feeding the ammonia can be enhanced since the generated ammonia is added to the exhaust gas.

It is preferable in the exhaust emission control device that dielectric pellets are charged in the urea water in the vessel. Such charging of the dielectric pellets in the urea water brings about generation of plasma on surfaces of the pellets, thereby further effectively enhancing the action of generating ammonia from the urea water.

In the exhaust emission control device, ammonia gas may be taken out from the ammonia generator. Addition of such ammonia gas to the exhaust gas causes no trouble of lowering the exhaust temperature, so that NOₓ reduction effect of the selective reduction catalyst in an operational status with low exhaust temperature can be further enhanced.

In the exhaust emission control device, ammonia water may be taken out from the ammonia generator. Addition of such ammonia water to the exhaust gas substantially causes no trouble of lowering the exhaust temperature, though subtle heat may be taken upon evaporation of the water. Thus, NOₓ reduction effect of the selective reduction catalyst in an operational status with low exhaust temperature can be highly maintained.

In the exhaust emission control device, a pH meter may be arranged which detects concentration of ammonia taken out from the vessel and a controller may be arranged which outputs a command on amount of ammonia to be fed upstream of the selective reduction catalyst on the basis of detected value from the pH meter, whereby actual amount of ammonia to be fed to the exhaust gas can be controlled with high response.

### Effects of the Invention

The above-mentioned exhaust emission control device of the invention has effects and advantages. Ammonia is effectively generated through action of plasma on urea water in an ammonia generator and is fed upstream of the selective reduction catalyst so that, unlike the conventional supply of urea water, a required amount of ammonia can be surely added to exhaust gas without lowering in temperature of the exhaust gas; thus, even in an operational status with low exhaust temperature, NOₓ can be effectively reduced by the selective reduction catalyst. Because of ammonia being generated through action of the plasma on the urea water, the generation of the ammonia can be easily and rapidly adjusted; because of the generated ammonia being added to the exhaust gas, response in feeding the ammonia to the exhaust gas can be enhanced.

### Brief Description of the Drawings

[Fig. 1] A schematic overall diagram showing an exhaust pipe pathway of an engine to which an exhaust emission control device of the invention is applied.
[Fig. 2] A schematic diagram showing an embodiment to take out ammonia gas from the ammonia generator shown in Fig. 1.
[Fig. 3] A perspective view showing a case where a plurality of vessels each similar to that of Fig. 2 are provided in module structure.
[Fig. 4] A schematic diagram of an embodiment to take out ammonia water from the ammonia generator of Fig. 2.
[Fig. 5] A schematic diagram of an embodiment to take out ammonia gas from an ammonia generator different from that shown in Fig. 2.
[Fig. 6] A schematic diagram of an embodiment to take out ammonia water from the ammonia generator of Fig. 5.
[Fig. 7] A graph showing relationship between exhaust temperature and NOₓ reduction ratio.

### Explanation of the Reference Numerals

- 9: exhaust pipe
- 10: selective reduction catalyst
- 12: ammonia generator
- 13: ammonia
- 13a: ammonia gas (ammonia)
- 13b: ammonia water (ammonia)
- 15: vessel
- 16: electrode
- 17: casing
- 19a: dielectric pellet
- 23a: urea water
- 32: controller
- 37: pH meter
- 38: detected pH value
- 39: ammonia feed command
- 40: vessel
- 41: electrode plate

### Best Mode for Carrying Out the Invention

Embodiments of the invention will be described in conjunction with drawings.

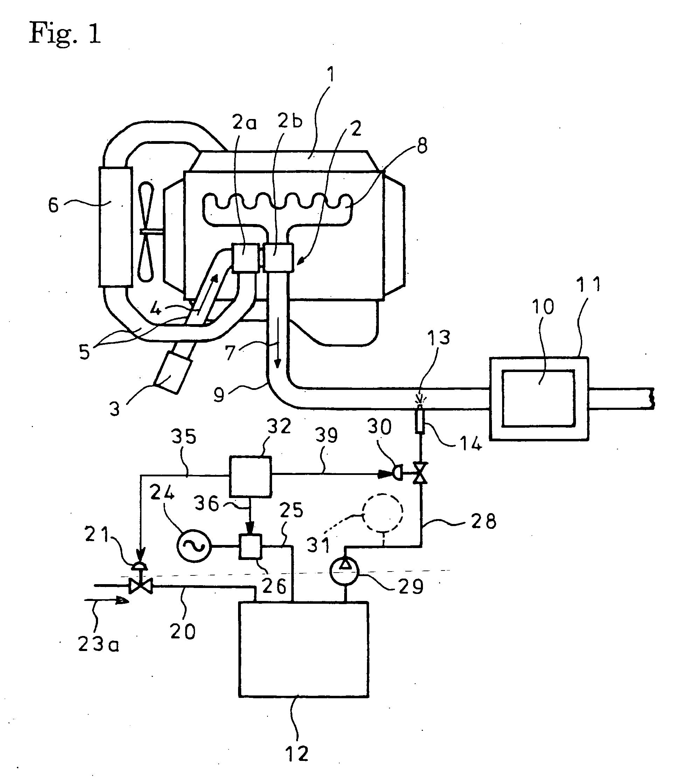

Fig. 1 is a schematic overall diagram showing an exhaust pipe pathway of an engine to which an exhaust emission control device of the invention is applied. In Fig. 1, reference numeral 1 designates an engine such as diesel engine, the engine 1 illustrated having a turbocharger 2 with a compressor 2a to which air 4 from an air cleaner 3 is fed through an intake pipe 5. The air 4 thus pressurized in the compressor 2a is further fed to an intercooler 6 where it is cooled. The cooled air 4 from the intercooler 6 is guided to an intake manifold (not shown) from which it is guided to respective cylinders of the engine 1.

Exhaust gas discharged from the respective cylinders of the engine 1 is fed via an exhaust manifold 8 to a turbine 2b of the turbocharger 2. The exhaust gas 7 thus having driven the turbine 2b is discharged via an exhaust pipe 9 to outside of the vehicle.

Incorporated in the exhaust pipe 9 through which the exhaust gas 7 flows is a selective reduction catalyst 10 encased by a casing 11. The selective reduction catalyst 10 is in the form of a flow-through type honeycomb structure and has a feature capable of selectively reacting NOₓ with ammonia even in the presence of oxygen.

In the above construction, the exhaust pipe 9 is provided with a spray nozzle 14 upstream of the casing 11, said nozzle injecting ammonia 13 generated in an ammonia generator 12 to add the same to the exhaust gas 7.

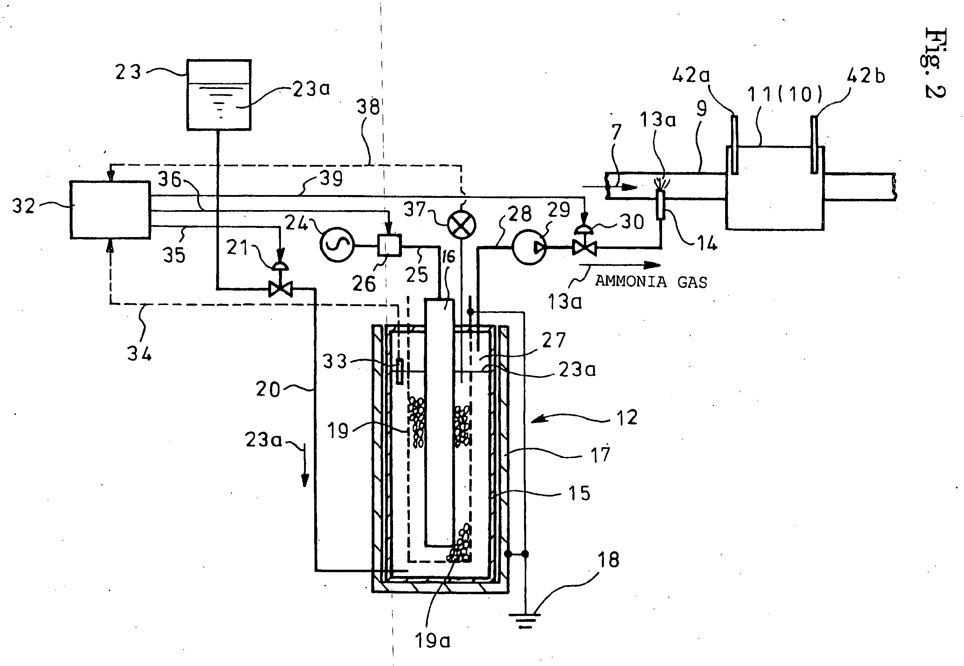

Fig. 2 shows an embodiment in which ammonia gas 13a is taken out from the ammonia generator 12 of Fig. 1. In the ammonia generator 12, as ammonia 13, the ammonia gas 13a is generated and is fed to the exhaust gas 7 in the exhaust pipe 9.

In Fig. 2, reference numeral 15 denotes a vessel made from heat-resisting and insulating material such as polyethylene fluoride (e.g., Teflon (registered trademark)). Arranged centrally in the vessel 15 is an electrode 16 with its lower end extending adjacent to a bottom of the vessel 15 and with its upper end projected out of and fixed to the vessel 15. The vessel 15 is encased by a casing 17 made from electro-conductive material such as iron, the casing 17 being connected to an earth 18.

In the embodiment shown in Fig. 2, arranged in the vessel 15 is wirework 19 made of stainless steel into which charged are dielectric pellets 19a which in turn may be made from material with high dielectric constant such as titania, barium titanate or alumina. The wirework 19 is connected to the earth 18.

Inserted into and opened in the vessel 15 adjacent to the bottom thereof is a lower end of a urea water feed pipe 20 which serves to feed urea water 23a in a urea water tank 23 arranged above the vessel 15 into the vessel 15 via a urea water feed valve 21.

The electrode 16 is connected with power wire 25 which in turn is connected to a power source 24 such as battery. The power wire 25 is provided with a controller 26 for control of voltage, driving pulse and the like. Thus, energization of the electrode 16 by the power source 24 generates plasma between the electrode 16 and casing 17, such plasma acting on the urea water 23a for decomposition into ammonia and carbon dioxide.

Opened to space 27 in the vessel 15 and above a liquid level of the urea water 23a is an ammonia feed pipe 28 which is connected via a pump 29 and an ammonia feed valve 30 to the spray nozzle 14. Thus, in this embodiment, the ammonia gas 13a generated in the space 27 of the vessel 15 is taken out through the ammonia feed pipe 28 and fed to the spray nozzle 14. In this connection, if the space 27 is low in volume, the ammonia gas 13a may have difficulty to stably feed; therefore, as shown in Fig. 1, the ammonia feed pipe 28 is preferably provided with an ammonia gas storage tank 31 for temporary storage of the ammonia gas 13a generated in the space 27.

In Figs. 1 and 2, reference numeral 32 denotes a controller into which inputted is a liquid level signal 34 from a liquid-level meter 33 arranged in the vessel 15 for detection of a liquid level. Thus, depending upon the liquid level signal 34 from the meter 33, the controller 32 outputs a urea water feed command 35 to control an opening degree of the urea water feed valve 21 so as to keep constant an amount of urea water 23a in the vessel 15.

The controller 32 outputs an electricity control command 36 to control the controller 26 such that the electricity fed to the electrode 16 has predetermined voltage and drive pulse.

Further inputted to the controller 32 is a detected pH value 38 from a pH meter 37 which detects pH of the urea water 23a in the vessel 15 (pH adjacent to the liquid level of the urea water 23a). Thus, depending upon the detected pH value 38 from the pH meter 37, the controller 32 outputs ammonia feed command 39 to control an opening degree of the ammonia feed valve 30 to control the flow rate of the ammonia gas 13a fed to the spray nozzle 14. More specifically, the controller 32 and an engine control computer (ECU: Electronic Control Unit)(not shown) exchange data such as revolution speed and load of the engine 1, detected temperatures of inlet and outlet temperature sensors 42a and 42b for the selective reduction catalyst 10 and intake air amount; on the basis of a current operational status judged from such data, an amount of NOₓ generated is presumed. An amount of the ammonia gas 13a to match the presumed generation amount of NOₓ is calculated so that the required amount of ammonia gas 13a is added to the exhaust gas 7.

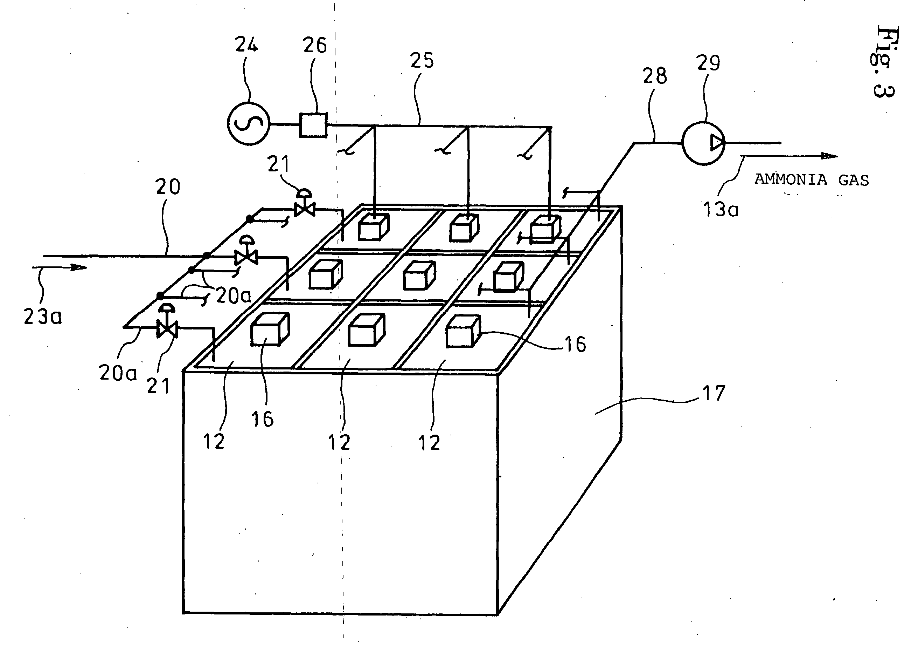

Fig. 3 shows an embodiment with a plurality of such ammonia generators 12. Inner space of a casing 17 is partitioned in the form of lattice by electrically conductive material, each partitioned space of the casing 17 receiving the module-structured ammonia generators 12 each constituted by the vessel 15. With the plural ammonia generators 12 being arranged as shown in Fig. 3, the urea water feed pipe 20 is branched into a plurality of branch pipes 20a. Through a urea water feed valve 21 in each of the branch pipes 20a, urea water 23a is fed to each of the vessels 15. To the respective electrodes 16 of the vessels 15, energization is effected by the power wire 25 in the same condition. The ammonia gas 13a generated in the respective vessels 15 is taken out together by the single ammonia feed pipe 28.

Next, mode of operation of the above embodiments will be described.

As shown in Fig. 2, with a predetermined amount of urea water 23a being fed to the vessel 15 in the ammonia generator 12, electricity is fed from the power source 24 (battery) for control of voltage, driving pulse and the like by the controller 26 to a predetermined condition. Then, plasma is generated between the electrode 16 and casing 17 and, by the action of the plasma generated, the urea water 23a is decomposed as shown by

(NH₂)₂CO + H₂O → 2NH₃ + CO₂

into ammonia and carbon dioxide. As a result, the urea water 23a in the vessel 15 is changed into ammonia water while the ammonia gas 13a is generated in the upper space 27 of the vessel 15, the ammonia gas 13a containing carbon dioxide and evaporated water.

As mentioned above, in the ammonia generator 12, the plasma acts on the urea water 23a for decomposition into ammonia gas 13a, so that the ammonia gas 13a can be generated easily and quickly.

Further, in this connection, when the dielectric pellets 19a made of material with high dielectric constant such as titania, barium titanate or alumina are charged in the urea water 23a in the vessel 15, plasma is generated on respective surfaces of the pellets 19a, which substantially enhance decomposition reaction of the urea water 23a, resulting in effective generation of the ammonia gas 13a. With the plural ammonia generators 12 being arranged as shown in Fig. 3, the ammonia gas 13a can be generated concurrently in large quantity for supply.

In the above, by driving the pump 29, the ammonia gas 13a generated in the vessel 15 is taken out through the ammonia feed pipe 28 and is injected by the spray nozzle 14 upstream of the selective reduction catalyst 10 to be added to the exhaust gas 7 in the exhaust pipe 9.

Then, the controller 32 and the engine control computer (not shown) exchange data such as revolution speed and load of the engine 1, detected temperatures by the inlet and outlet temperature sensors 42a and 42b for the selective reduction catalyst 10 and intake air amount to thereby detect the current operational status, so that a generation amount of NOₓ is presumed on the basis of the detected operational status. An amount of the ammonia gas 13a to match the presumed generation amount of NOₓ is calculated and the ammonia feed valve 30 is controlled by the ammonia feed command 39 so as to feed the required amount of ammonia gas 13a. Since the detected pH value 38 from the pH meter 37 in the vessel 15 is inputted into the controller 32, the controller 32 can calculate ammonia concentration depending upon the detected pH value 38 of the pH meter 37 to compensate, on the basis of such ammonia concentration, the ammonia feed command 39 for control of the opening degree of the ammonia feed valve 30.

Since the liquid level in the vessel 15 is gradually lowered due to the fact that the ammonia gas 13a decomposed from the urea water 23a is taken out as mentioned above and due to evaporation of the water, the urea water feed valve 21 is controlled by the controller 32 on the basis of the liquid level signal 34 from the liquid level meter 33 so as to feed, to the vessel 15, the urea water 23a adjusted to a predetermined concentration in the tank 23, whereby the amount of the urea water 23a in the vessel 15 is kept constant.

According to the above embodiment, irrespective of the temperature of the exhaust gas 7, the ammonia generator 12 generates the ammonia gas 13a by the action of the plasma, the ammonia gas 13a being injected into and fed to the exhaust gas 7 in the exhaust pipe 9. As a result, in comparison with the conventional feed of urea water, a required amount of ammonia can be surely added to the exhaust gas 7 even if the temperature of the exhaust gas 7 is low; thus, even in a vehicle with travel pattern of continuing the operational status with low exhaust temperature, a sufficient NOₓ reduction effect can be exhibited even at exhaust temperature lower than that conventionally required therefor. Since the ammonia gas 13a causes no problem of lowering the exhaust temperature upon addition to the exhaust gas 7, NOₓ reduction effect can be further highly maintained in the operational status with low exhaust temperature.

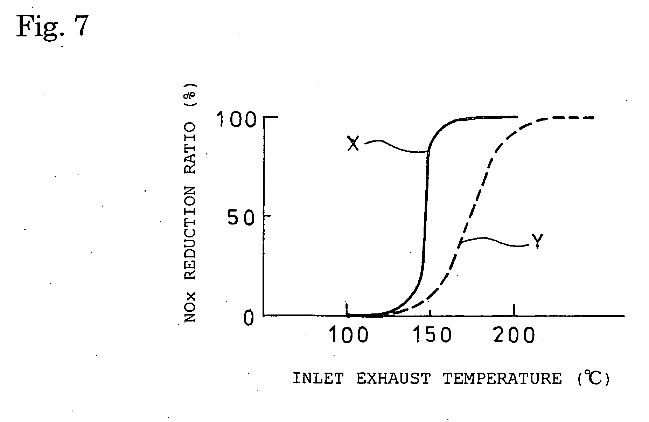

In fact, according to experimental results effected by the inventors as shown in the graph of Fig. 7 where comparison was made between a case X of the above-mentioned embodiment of the invention and a conventional case Y of urea water being added to exhaust gas as it is, it has been actually ascertained that high NOₓ reduction ratio can be obtained with temperature (the inlet exhaust temperature of the selective reduction catalyst 10 being about 140°C or so) lower in the case X of the inventive embodiment than in the conventional case Y.

Since the ammonia gas 13a is generated through the action of the plasma on the urea water 23a, the generation of the ammonia gas 13a can be easily and rapidly adjusted. Since the generated ammonia gas 13a is added to the exhaust gas 7, the amount of ammonia gas 13a to be fed to the exhaust gas 7 can be controlled with high response.

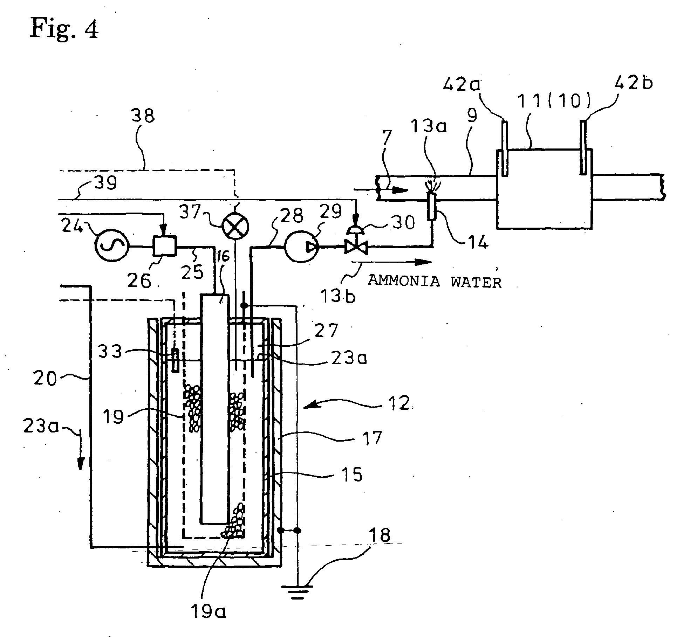

Fig. 4 shows an embodiment where ammonia water 13b generated through action of plasma on the urea water 23a in the vessel 15 in the ammonia generator 12 of Fig. 2 is injected upstream of the selective reduction catalyst 10. In this embodiment, the ammonia feed pipe 28 is opened in the liquid adjacent to the liquid level within the vessel 15. The urea water 23a fed by the urea water feed pipe 20 to a position adjacent to the bottom of the vessel 15 flows upward while decomposed into ammonia and carbon dioxide through the plasma formed between the electrode 16 and casing 17. The ammonia generated by decomposition dissolves in water so that ammonia water 13b exists in and especially at the upper part of the liquid in the vessel 15. Thus, such ammonia water 13b is injected by the spray nozzle 14 through the pump 29 and ammonia feed valve 30 into the exhaust pipe 9 upstream of the selective reduction catalyst 10 for mixture with the exhaust gas 7.

When the ammonia water 13b generated in the ammonia generator 12 is added in this manner to the exhaust gas 7, ammonia in the ammonia water 13b is reacted with NOₓ and NOₓ reduction effect can be obtained just like the above. Even in a vehicle with travel pattern of continuing operational status with low exhaust temperature for a long time, a sufficient NOₓ reduction effect can be obtained even at exhaust temperature lower than that conventionally required therefor. More specifically, when the ammonia water 13b is added to the exhaust gas 7, subtle heat may be taken upon evaporation of the water; however, endotherm required for evaporation of the water is lower than heat required in a conventional pyrolytical decomposition of the urea water 23 into ammonia and carbon dioxide in utilization of heat of the exhaust gas 7. Thus, lowering in temperature of the exhaust gas 7 is subtle; therefore, according to the invention, also in a case where the ammonia water 13b is fed to the exhaust gas 7, the NOₓ reduction effect can be highly maintained even in an operational status with low exhaust temperature.

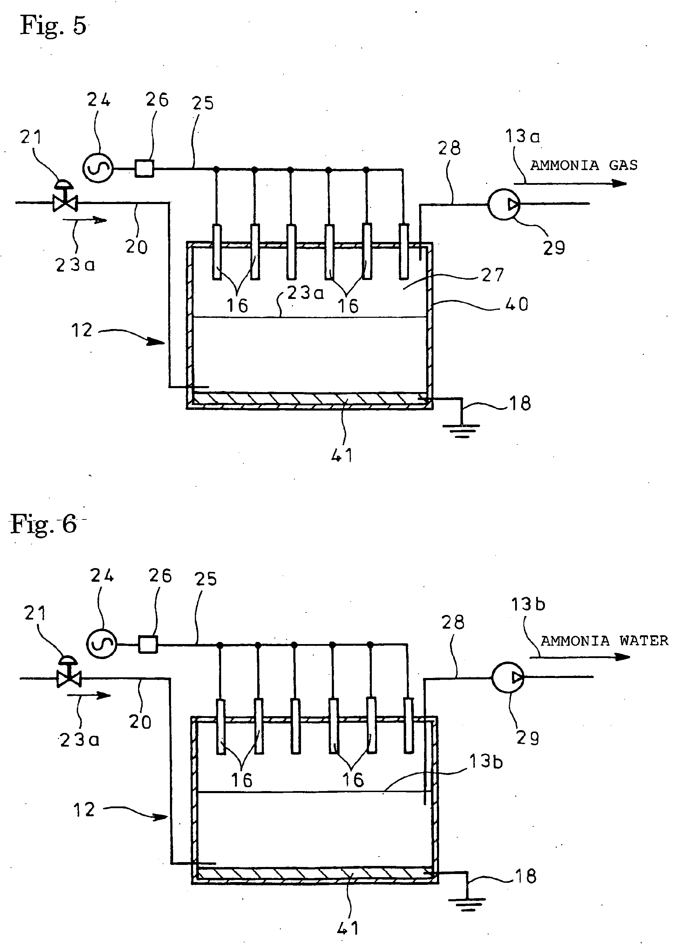

Fig. 5 is a schematic diagram showing an embodiment to take out ammonia gas 13a from an ammonia generator 12 which is structurally different from that of Fig. 2. This ammonia generator 12 is provided with a laterally elongated vessel 40 made from heat-resisting and insulating material for holding urea water 23a. In the above within the vessel 40, a plurality of electrodes 16 are arranged in laterally spaced-apart relationship and are spaced at their lower ends to the liquid level of the urea water 23a by a predetermined distance. The respective electrodes 16 are connected to power wire 25 which in turn is connected via a controller 26 to a power source 24 such as battery. Arranged on a bottom of the vessel 40 is an electrode plate 41 which is made from conductive material and is connected to the earth 18. The vessel 40 is further provided with a urea water feed pipe 20 similar to that in the above-mentioned embodiment.

Further arranged in space 27 within the vessel 40 above the liquid level of the urea water 23a is an ammonia feed pipe 28 similar to that in Fig. 2 embodiment. The ammonia feed pipe 28 is connected to the spray nozzle 14 via a pump 29 and the ammonia feed valve 30 of Fig. 2.

In Fig. 5 embodiment, only the urea water 23a is fed in the vessel 40; however, alternatively, just like Figs. 2 and 4, dielectric pellets 19 made from material with high dielectric constant such as titania, barium titanate or alumina may be charged in the vessel 40 in addition to the urea water 23a.

In the Fig. 5 embodiment, through plasma generated by energization of the electrodes 16 and electrode plate 41, the urea water 23a is decomposed into ammonia and carbon dioxide, ammonia gas 13a being generated in the upper space 27 of the vessel 15.

Thus, in the ammonia generator 12 of Fig. 5, irrespective of temperature of the exhaust gas 7, the ammonia gas 13a can be generated by the action of the plasma. When added to the exhaust gas 7, the ammonia gas 13a is reacted with NOₓ to reduce NOₓ; thus, even in a vehicle with travel pattern of continuing operational status with low exhaust temperature for a long time, a satisfactory NOₓ reduction effect can be obtained with exhaust temperature lower than that conventionally required therefor.

Fig. 6 is a diagram showing an embodiment to take out ammonia water 13b from the ammonia generator of Fig. 5. In this embodiment, in order to inject the ammonia water 13b generated by decomposition of the urea water 23a in the vessel 40 through plasma into an exhaust pipe 9 upstream of selective reduction catalyst 10, an ammonia feed pipe 28 is opened in the ammonia water 13b within the vessel 40. More specifically, urea water 23a fed to a position adjacent to the bottom of the vessel 40 by a urea water feed pipe 20 flows upward while gradually decomposed into ammonia and carbon dioxide by the plasma formed between electrodes 16 and an electrode plate 41, so that ammonia water 13b exits above within the vessel 40. Thus, such ammonia water 13b adjacent to the liquid level is injected upstream of the selective reduction catalyst 10 via a pump 29 and the ammonia feed valve 30 of Fig. 2.

Since the ammonia water 13b generated in the ammonia generator 12 is added in this manner to the exhaust gas 7, ammonia in the ammonia water 13b is reacted with NOₓ to obtain NOₓ reduction effect just like the above. Thus, even in a vehicle with travel pattern of continuing operational status with low exhaust temperature for a long time, a satisfactory NOₓ reduction effect can be obtained with exhaust temperature lower than that required conventionally therefor. More specifically, when the ammonia water 13b is added to the exhaust gas 7, subtle heat may be taken upon evaporation of the water; however, lowering in temperature of the exhaust gas 7 is subtle in comparison with a conventional pyrolytical decomposition of the urea water 23a into ammonia and carbon dioxide in utilization of heat of the exhaust gas 7. Thus, also in a case of feeding the ammonia water 13b, the NOₓ reduction effect can be highly maintained even in an operational status with low exhaust temperature.

### Industrial Applicability

An exhaust emission control device of the invention can be effectively utilized in effectively generating ammonia from urea water and in enhancing controllability in ammonia addition for obtaining a satisfactory NOₓ reduction effect even in a vehicle with travel pattern of continuing operational status with exhaust temperature lower than that required conventionally therefor.

## Claims

1. An exhaust emission control device with a selective reduction catalyst (10) incorporated in an exhaust pipe (9), ammonia (13) being added upstream of the catalyst (10) so as to reduce and purify NOₓ, said exhaust emission control device comprising an ammonia generator (12) with a vessel (15) for holding urea water (23a) and with an electrode (16) for generation of ammonia (13) through action of plasma on the urea water (23a) in the vessel (15), the ammonia (13) generated in the ammonia generator (12) being fed upstream of the catalyst (10).

2. An exhaust emission control device as claimed in claim 1, wherein dielectric pellets (19a) are charged in the urea water (23a) in the vessel (15).

3. An exhaust emission control device as claimed in claim 1 or 2, wherein ammonia gas (13a) is taken out from the ammonia generator (12).

4. An exhaust emission control device as claimed in claim 1 or 2, wherein ammonia water (13b) is taken out from the ammonia generator (12).

5. An exhaust emission control device as claimed in any one of claims 1-4, further comprising a pH meter (37) for detecting concentration of ammonia (13) taken out from the vessel (15) and a controller (32) for outputting a command on an amount of ammonia to be fed upstream of the catalyst (10) on the basis of the detected concentration value (38) from the pH meter.

## Patentansprüche

1. Abgasemissions-Steuervorrichtung mit einem selektiven Reduktionskatalysator (10), der in ein Abgasrohr (9) eingebaut ist, wobei auf der Einlassseite des Katalysators (10) Ammoniak hinzugefügt wird, um NOₓ zu reduzieren und zu reinigen, wobei die Abgasemissions-Steuervorrichtung einen Ammoniakgenerator (12) umfasst, der ein Gefäß (15), um Harnstoffwasser (23a) zu halten, und eine Elektrode (16), um durch Einwirkung von Plasma auf das Harnstoffwasser (23a) in dem Gefäß (15) Ammoniak zu erzeugen, aufweist, wobei der in dem Ammoniakgenerator (12) erzeugte Ammoniak (13) zur Einlassseite des Katalysators (10) befördert wird.

2. Abgasemissions-Steuervorrichtung nach Anspruch 1, wobei in das Harnstoffwasser (23a) im Gefäß (15) dielektrische Pellets (19a) geladen sind.

3. Abgasemissions-Steuervorrichtung nach Anspruch 1 oder 2, wobei das Ammoniakgas (13a) aus dem Ammoniakgenerator (12) entnommen wird.

4. Abgasemissions-Steuervorrichtung nach Anspruch 1 oder 2, wobei Ammoniakwasser (13b) aus dem Ammoniakgenerator (12) entnommen wird.

5. Abgasemissions-Steuervorrichtung nach einem der Ansprüche 1-4, die ferner ein pH-Messgerät (37), um die Konzentration von Ammoniak (13), das aus dem Gefäß (15) entnommen wird, zu erfassen, und eine Steuereinheit (32), um einen Befehl bezüglich einer der Einlassseite des Katalysators (10) zuzuführenden Ammoniakmenge anhand des erfassten Konzentrationswertes (38) von dem pH-Messgerät auszugeben, umfasst.

## Revendications

1. Appareil de purification des gaz d'échappement avec un catalyseur de réduction sélectif (10) incorporé dans un tuyau d'échappement (9), de l'ammoniac (13) étant ajouté en amont du catalyseur (10) de façon à réduire et purifier NOₓ, le dit appareil de purification des gaz d'échappement comprenant un générateur d'ammoniac (12) avec une cuve (15) pour contenir de l'eau d'urée (23a) et avec une électrode (16) pour la génération d'ammoniac (13) par l'action de plasma sur l'eau d'urée (23a) dans la cuve (15), l'ammoniac (13) engendré dans le générateur d'ammoniac (12) étant introduit en amont du catalyseur (10).

2. Appareil de purification des gaz d'échappement selon la revendication 1, dans lequel des boulettes diélectriques (19a) sont chargées dans l'eau d'urée (23a) dans la cuve (15).

3. Appareil de purification des gaz d'échappement selon la revendication 1 ou 2, dans lequel de l'ammoniac gazeux (13a) est extrait du générateur d'ammoniac (12).

4. Appareil de purification des gaz d'échappement selon la revendication 1 ou 2, dans lequel de l'eau ammoniaquée (13b) est extraite du générateur d'ammoniac (12).

5. Appareil de purification des gaz d'échappement selon une quelconque des revendications 1 à 4, , comprenant en outre un pHmètre (37) pour détecter la concentration d'ammoniac (13) sortant de la cuve (15) et un régulateur (32) pour fournir une instruction concernant la quantité d'ammoniac à introduire en amont du catalyseur (10) sur la base de la valeur de concentration détectée (38) fournie par le pHmètre.
